(19) Europäisches Patentamt
European Patent Office
Office européen des brevets

(11) **EP 1 149 004 B1**

(12) **EUROPÄISCHE PATENTSCHRIFT**

(45) Veröffentlichungstag und Bekanntmachung des Hinweises auf die Patenterteilung:
**07.04.2004 Patentblatt 2004/15**

(51) Int Cl.⁷: **B60R 21/00**, G01P 15/00, G01P 21/00

(21) Anmeldenummer: 00903518.9

(22) Anmeldetag: **12.01.2000**

(86) Internationale Anmeldenummer:
**PCT/DE2000/000088**

(87) Internationale Veröffentlichungsnummer:
**WO 2000/041917 (20.07.2000 Gazette 2000/29)**

(54) **VERFAHREN ZUR FUNKTIONSÜBERPRÜFUNG EINER STEUERANORDNUNG FÜR INSASSENSCHUTZMITTEL IN EINEM KRAFTFAHRZEUG**

METHOD FOR VERIFYING THE FUNCTION OF A CONTROL SYSTEM FOR PASSENGER PROTECTION MEANS IN A MOTOR VEHICLE

PROCEDE POUR VERIFIER LA FONCTION D'UN SYSTEME DE COMMANDE POUR MOYENS DE PROTECTION DES PASSAGERS DANS UNE AUTOMOBILE

(84) Benannte Vertragsstaaten:
**DE FR GB IT**

(30) Priorität: **12.01.1999 DE 19900844**

(43) Veröffentlichungstag der Anmeldung:
**31.10.2001 Patentblatt 2001/44**

(73) Patentinhaber: **SIEMENS AKTIENGESELLSCHAFT**
**80333 München (DE)**

(72) Erfinder:
• **SCHMIDT, Claus**
**D-93053 Regensburg (DE)**
• **MADER, Gerhard**
**D-93107 Thalmassing (DE)**
• **HERMANN, Stefan**
**D-93096 Köfering (DE)**

(56) Entgegenhaltungen:
**WO-A-98/19171          DE-A- 19 645 952**

• **PATENT ABSTRACTS OF JAPAN vol. 017, no. 141 (P-1506), 23. März 1993 (1993-03-23) & JP 04 315058 A (TOYOTA MOTOR CORP), 6. November 1992 (1992-11-06)**

EP 1 149 004 B1

**Beschreibung**

Verfahren und Vorrichtung zur Funktionsüberprüfung einer Steueranordnung für Insassenschutzmittel in einem Kraftfahrzeug.

Die Erfindung betrifft ein Verfahren sowie eine Vorrichtung zur Funktionsüberprüfung einer Steueranordnung für Insassenschutzmittel gemäß Oberbegriff des Patentanspruchs 1 bzw. 8.

Aus der WO 98/19171 A1 ist ein gattungsbildendes System zur Funktionsüberprüfung einer Steueranordnung für Insassenschutzsysteme bekannt.

Die EP 0 419 455 B1 beschreibt eine Steueranordnung zum Auslösen eines Rückhaltemittels in einem Kraftfahrzeug, bei der eine Sensoreinrichtung ein Längsbeschleunigungssignal und ein Querbeschleunigungssignal liefert. In Abhängigkeit von dem Längs- und von dem Querbeschleunigungssignal wird von einer nachgeschalteten Auswerteeinrichtung der Steueranordnung ein Auslösesignal für das Rückhaltemittel zum Frontaufprallschutz generiert.

Eine Steueranordnung zum Auslösen eines Rückhaltemittels in einem Kraftfahrzeug offenbart zudem die US 4 933 570. Hierbei wird in Abhängigkeit eines von einem Beschleunigungssensor gelieferten Signals und eines Schaltsignals eines mechanischen Beschleunigungsschalters ein Auslösesignal für das Rückhaltemittel erzeugt. Derartige als Beschleunigungsschalter ausgebildete sogenannte Safing-Sensoren sorgen für eine Verhinderung der Auslösung des Rückhaltemittels, wenn der Beschleunigungssensor oder die Auswerteeinrichtung fehlerhaft arbeiten und demzufolge ein fehlerhaftes Auslösesignal liefern. Ein solcher Beschleunigungsschalter im Zündkreis weist gewöhnlich eine niedrige Ansprechschwelle auf und liefert damit ein Zeitfenster, innerhalb dessen eine Auslösung aufgrund einer Bewertung der von dem Beschleunigungssensor gelieferten Signale erfolgen kann.

Bei sogenannten mehrkanaligen Steueranordnungen zum Insassenschutz, d.h. bei Steueranordnungen mit mehreren unterschiedlich ausgerichteten Beschleunigungssensoren, kann jedem einzelnen Sensor ein redundanter Sensor mit den Eigenschaften eines Safing-Sensors - also z.B. ein mechanischer Beschleunigungsschalter - zugeordnet werden. Bei einer Steueranordnung mit zwei Kanälen wären demzufolge vier Beschleunigungssensoren/-schalter erforderlich, um den Ausfall eines Kanals feststellen zu können. Eine solche Steueranordnung mit vier Beschleunigungssensoren ist bauteilintensiv und beansprucht aufgrund der nach wie vor relativ großen Abmessungen von Safing-Sensoren großen Bauraum.

Weiterhin ist aus der DE 196 45 952 A1 eine Steueranordnung zum Auslösen eines Rückhaltemittels in einem Kraftfahrzeug bekannt, die eine Sensoreinrichtung mit drei Längsbeschleunigungssensoren aufweist. Die Beschleunigungssensoren sind derart sternförmig angeordnet, dass sie jeweils unterschiedlich ausgerichtete Empfindlichkeitsachsen aufweisen. In einer nachgeschalteten Auswerteeinrichtung kann bereits aus den Signalen von nur zwei der drei Beschleunigungssensoren die Richtung und die Stärke einer auf das Fahrzeug einwirkenden Beschleunigung ermittelt werden. Das Signal des dritten Beschleunigungssensor wird hierbei zur Überprüfung einer der beiden errechneten Größen, der Richtung oder der Stärke der auf das Fahrzeug einwirkenden Beschleunigung, herangezogen. Der dritte Sensor übernimmt somit die Funktion eines Safing-Sensors und kann auf diese Weise die Auslösung des Rückhaltemittels verhindern, wenn der von ihm zur Verfügung gestellte Wert signifikant von einem zuvor aus den Signalen der beiden anderen Sensoren berechneten Wert abweicht.

Schließlich sei noch auf die JP 04315058 A hingewiesen.

Aufgabe der Erfindung ist es, ein einfaches Verfahren nebst Vorrichtung zur Funktionsüberprüfung eines Systems von mehreren Beschleunigungssensoren einer Steueranordnung für Insassenschutzmittel in einem Kraftfahrzeug zu liefern.

Die Aufgabe wird erfindungsgemäß durch die Merkmale des Patentanspruchs 1 bzw. 8 gelöst.

Vorteilhafte Weiterbildungen der Erfindung sind in den Unteransprüchen gekennzeichnet.

Vorteile der Erfindung und ihre Weiterbildungen finden sich in der Figurenbeschreibung.

Die Erfindung und ihre Weiterbildungen werden anhand von Ausführungsbeispielen in der Zeichnung näher erläutert. Es zeigen:

Figur 1    ein symbolisch angedeutetes Fahrzeug mit einer sternförmigen Anordnung von drei Beschleunigungssensoren nach dem Stand der Technik;

Figur 2    eine erfindungsgemäße Anordnung mit einem X-Y-Beschleunigungssensor und einem weiteren Beschleunigungssensor; und

Figur 3    eine alternative Sensorausrichtung der Anordnung gemäß Figur 2.

Gleiche Elemente bzw. Signale sind figurenübergreifend durch gleiche Bezugszeichen gekennzeichnet.

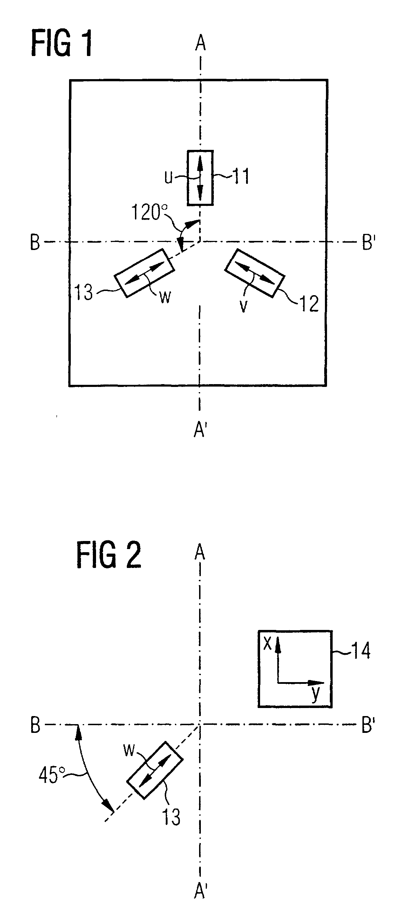

Figur 1 zeigt ein symbolisch angedeutetes Kraftfahrzeug mit einer Anordnung von mehreren Beschleunigungssensoren 11, 12, 13 zur Erzeugung von Beschleunigungssignalen in Crashsituationen nach dem Stand der Technik. Diese Beschleunigungssignale werden von einer hier nicht dargestellten Auswerteeinrichtung ausgewertet und in Abhängigkeit von Richtung und Stärke eines Aufpralles, hier ebenfalls nicht dargestellte, Insassenschutzeinrichtungen wie beispielsweise Airbags und Gurtstraffer ausgelöst.

Um beim Starten und/oder während des Betriebs des Kraftfahrzeuges die fehlerfreie Funktion der Beschleunigungssensoren überprüfen zu können, ist es vorteilhaft, die Beschleunigungssensoren einem sogenannten Selbsttest unterziehen zu können. Zu diesem Zweck kann eine mittelstarke Beschleunigung in positiver und/oder negativer Empfindlichkeitsrichtung eines Beschleunigungssensors simuliert werden, beispielsweise indem die seismische Masse des Beschleunigungssensors kapazitiv um einen bestimmten Betrag ausgelenkt wird. Vorteilhaft ist eine Durchführung des Selbsttests der einzelnen Sensoren dergestalt, dass eine angeschlossene Auswerteeinrichtung eine sogenannte Safing-Auswertung durchführen kann. Vom Ergebnis dieser Safing-Auswertung hängt es dann ab, ob ein Freigabesignal zur Auslösung der Insassenschutzmittel ausgegeben werden kann. Stellt die Safing-Auswertung beispielsweise eine nicht fehlerfreie Funktion eines oder mehrerer der Beschleunigungssensoren oder der nachgeschalteten Signalverarbeitung fest, wird kein Zündsignal zur Zündung eines Airbags erzeugt.

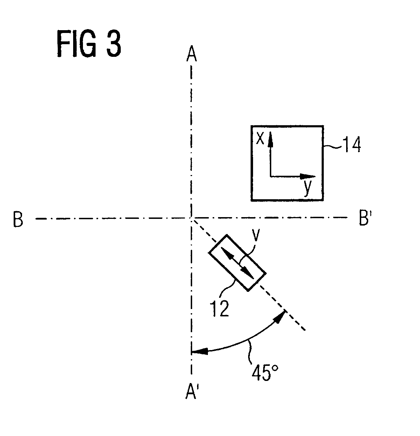

Dabei gilt im normalen Betrieb, dass die Summe der gewichteten Ausgangssignale der wenigstens drei Empfindlichkeitsachsen der Beschleunigungssensoren immer den Wert Null annehmen muss. Dies ist ein Kriterium für die ordnungsgemäße Funktion der Beschleunigungssensoren, welches im Betrieb zweckmäßigerweise permanent überwacht wird. Während eines sogenannten Selbsttests der Steueranordnung wird nun diese Nullsummenbildung überprüft und bei einer signifikanten Abweichung der Sollwerte eine Fehlfunktion erkannt. Bei der aus dem Stand der Technik bekannten sternförmigen Anordnung dreier gleicher Beschleunigungssensoren 11, 12, 13 entsprechend Figur 1 ist eine Gewichtung der Ausgangssignale nicht erforderlich; die Summe aus allen drei Signalen $a_u$, $a_v$, $a_w$ ist immer Null, unabhängig von der Richtung einer einwirkenden Beschleunigung. Anders dagegen bei den erfindungsgemäß bevorzugten Anordnungen entsprechend den Figuren 2 oder 3, wo eine Gewichtung des Ausgangssignales $a_w$ bzw. $a_v$ zur Erreichung einer Summe von Null aus allen drei Signalen $a_x$, $a_y$ und $a_w$ bzw. $a_v$ erforderlich ist.

Bei der bekannten sternförmigen Anordnung dreier Beschleunigungssensoren 11, 12, 13 gemäß Figur 1, auf welche aus Gründen des erleichterten Verständnisses der Erfindung nochmals zurückgegriffen werden soll, schließen die drei Empfindlichkeitsachsen u, v, w der Beschleunigungssensoren jeweils einen Winkel von 120° ein, so dass sich ein Selbsttest der beiden Sensoren 12, 13 beispielsweise dadurch vornehmen lässt, dass einer der beiden Sensoren in positiver, der andere in negativer Richtung ausgelenkt wird. Eine derartige Auslenkung kann zweckmäßigerweise einer Beschleunigung vom zehn- bis fünfzehnfachen Wert der Erdbeschleunigung (10G ... 15G) entsprechen. Wird der Beschleunigungssensor 13 in Richtung seiner Empfindlichkeitsachse w mit +10G ausgelenkt, so liefert er ein Ausgangssignal von

$$a_w = +10G.$$

Eine entsprechende Selbsttest-Auslenkung des Beschleunigungssensors 12 in Richtung der Empfindlichkeitsachse v der Stärke -10G liefert ein Ausgangssignal dieses Sensors von

$$a_v = -10G.$$

Der Beschleunigungssensor 11 unterliegt in diesem Beispiel keiner Selbsttest-Auslenkung, so dass er ein Ausgangssignal von

$$a_u = 0G$$

liefert. Bei einer Addition dieser drei Ausgangssignale in der nachgeschalteten Safing-Auswertung ergibt sich eine Summe von

$$a_u + a_v + a_w = +10G - 10G = 0.$$

Sollen bei dieser Anordnung alle drei Sensoren gleichzeitig überprüft werden, so kann beispielsweise die negative Selbsttestschwelle eines Sensors verdoppelt werden. Auf diese Weise ergäbe sich beim Aktivieren der Sensoren im Selbsttest wiederum die Summe Null:

$$a_u + a_v + a_w = +10G + 10G - 20G = 0.$$

Um die skizzierte Safing-Funktion mit hinreichender Zuverlässigkeit ausführen zu können, ist es allerdings erforderlich, dass die Sensoren ein hinreichend genaues Ausgangssignal liefern. Ein exakter Gleichlauf der Selbsttest-Werte wird sich in der Praxis meist nicht sicherstellen lassen, so dass zweckmäßigerweise ein gewisser Toleranzbereich des ermittelten Summenwertes aus den Ausgangssignalen $a_u$, $a_v$, $a_w$ der Beschleunigungssensoren 11, 12, 13 zuzulassen ist. Somit wird auch bei einem sehr kleinen Summensignal ungleich Null eine fehlerfreie Funktion der Beschleunigungssensoren 11, 12, 13 erkannt und demzufolge ein Freigabesignal ausgegeben.

Figur 2 zeigt eine erste erfindungsgemäß bevorzugte Anordnung von Beschleunigungssensoren zur Crashdetektion. Ein X-Y-Beschleunigungssensor 14 mit zwei zueinander senkrechten Empfindlichkeitsachsen x und y liefert zwei Ausgangssignale $a_x$, $a_y$ in Abhängigkeit von der jeweiligen Beschleunigungskomponente in Richtung der Achsen x, y. Im dargestellten Ausführungsbeispiel ist die Empfindlichkeitsachse x parallel zur Fahrzeuglängsachse A-A', die Empfindlichkeitsachse y entsprechend parallel zur Fahrzeugquerachse B-B' angeordnet. Allerdings ist auch jede andere Anordnung mit beliebig in dieser, aus Fahrzeuglängsachse A-A' und Fahrzeugquerachse B-B' aufgespannten, Ebene gedrehten Einbaulage möglich. Ein weiterer Beschleunigungssensor 13 mit einer innerhalb der oben bezeichneten Ebene um 45° gedrehten Empfindlichkeitsachse w liefert das Beschleunigungssignal $a_w$.

Ein Selbsttest zur Sicherstellung der oben skizzierten Safing-Funktion kann beispielsweise durch eine kapazitive Auslenkung der seismischen Massen der Beschleunigungssensoren 13, 14 erfolgen. Es muss erwähnt werden, dass bei dem skizzierten Selbsttest die gewichteten Ausgangssignale in eine beliebig ausgewählte Achsrichtung verglichen werden. Die Ausgangssignale $a_x$, $a_y$, $a_w$, welche jeweils einen positiven oder negativen Wert annehmen können, werden in der nachgeschalteten Auswerteeinrichtung summiert. Bei einer Selbsttest-Auslenkung mit einem zwölffachen Wert der Erdbeschleunigung (z.B. bei positiver Auslenkung der Empfindlichkeitsachsen x, y des X-Y-Beschleunigungssensors 14 und in entsprechend dazu entgegengesetzter Richtung, d.h. negativer Auslenkung der Empfindlichkeitsachse w des Beschleunigungssensors 13) muss die gewichtete Summe der Ausgangssignale den Wert Null ergeben, soll ein Freigabesignal zur Auslösung der Insassenschutzmittel erzeugt werden können.

Ein weiteres Kriterium zur Ausgabe eines Freigabesignals stellt sinnvollerweise die Überprüfung dar, ob wenigstens ein Beschleunigungssignal einen bestimmten Schwellwert übersteigt. Auf diese Weise kann verhindert werden, dass auch im Stillstand des Fahrzeugs, wo die Beschleunigungssignale jeweils Null sind und somit auch die Summe aus den Signalen wiederum Null ist, ein Freigabesignal für die Safingfunktion ausgegeben wird. Vielmehr wird immer dann die Safingfunktion gesperrt, solange der vorbestimmte Schwellwert nicht durch das Signal wenigstens eines der Beschleunigungssensoren 11, 12, 13, 14 überschritten wird. Erst wenn mindestens ein Wert eines Beschleunigungssignals $a_x$, $a_y$, $a_u$, $a_v$, $a_w$ den vorgestimmten Schwellwert (als Einzelwert oder als zeitliches Integral) übersteigt, wird die Safingfunktion freigegeben. Statt den Wert wenigstens eines Beschleunigungssignales mit einem Schwellwert zu vergleichen, kann auch ein Vektor aus zwei Signalen mit dem Schwellwert verglichen werden.

Eine derartige Schwellwertkontrolle kann in einer einfachen Schwellwertanalyse von nur einem, von zwei oder auch von allen drei Beschleunigungssignalen bestehen. Zweckmäßigerweise erfolgt jedoch eine logarithmische Erfassung der Signale und/oder eine Integralbildung über die Zeit mit nachfolgender Integralauswertung, um auf diese Weise zu zuverlässigeren Aussagen über einen Crashverlauf zu gelangen.

Da die Empfindlichkeitsachse w des Beschleunigungssensors 13 um 45° gegen die Fahrzeugquerachse B-B', d.h. um 135° gegen die Empfindlichkeitsachse x des X-Y-Beschleunigungssensors, geneigt ist, muss deren Ausgangssignal $a_w$ mit einem passenden Korrekturwert $K_w$ multipliziert werden. Je nach Winkelstellung der Empfindlichkeitsachsen x, w der Beschleunigungssensoren 13, 14 zueinander kann der Korrekturwert $K_w$ aus dem Sinuswert des Neigungswinkels errechnet werden. Im gewählten Beispielfall gilt

$$K_w = \sin 135°,$$

woraus sich die Summe der Ausgangssignale beim Selbsttest aus

$$a_x + a_y - a_w / K_w = 0$$

ergibt. Erfolgt beispielsweise eine Auslenkung in Fahrzeuglängsrichtung um 12G, so folgt daraus für obige Summe

$$+12G + 0 - 8{,}51G / \sin 135° = 0G,$$

woraus bei Überprüfung in der Safing-Auswertung und Feststellung eines Wertes annähernd Null ein Freigabesignal ausgegeben wird (der obige Zahlenwert 8,51 entspricht näherungsweise dem Quotienten aus 12 und der Wurzel aus 2). Diese Zahlenwerte entsprechen somit bereits den in der nachgeschalteten Auswerteroutine (zur Korrektur der unterschiedlichen Winkelstellungen) gewichteten Ausgangssignalen $a_x$, $a_y$, $a_w$ der Beschleunigungssensoren 14, 13.

Figur 3 zeigt eine alternative Sensorausrichtung der Anordnung entsprechend Figur 2. Neben dem X-Y-Beschleunigungssensor 14 ist wiederum ein weiterer Beschleunigungssensor 12 mit einer zur Fahrzeuglängsachse A-A' um 45° geneigten Empfindlichkeitsachse v vorgesehen. Da die Empfindlichkeitsachse v des Beschleunigungssensors 12 um 45° gegen die Fahrzeuglängsachse A-A', d.h. um 225° gegen die Empfindlichkeitsachse.x des X-Y-Beschleunigungssensors, geneigt ist, muss deren Ausgangssignal mit einem passenden Korrekturwert $K_v$ multipliziert werden. Je nach Winkelstellung der Empfindlichkeitsachsen x, v der Beschleunigungssensoren 12, 14 zueinander kann der Korrekturwert $K_v$ aus dem Sinuswert des Neigungswinkels errechnet werden. Im gewählten Beispielfall gilt

$$K_v = \sin 225°,$$

woraus sich die Summe der Ausgangssignale beim Selbsttest aus

$$a_x - a_y + a_v / K_v = 0$$

ergibt. Erfolgt beispielsweise eine Auslenkung in Fahrzeuglängsrichtung um 12G, so folgt daraus für obige Summe

$$+12G - 0 + 8{,}51G \, / \sin 225° = 0G,$$

woraus bei Überprüfung in der Safing-Auswertung und Feststellung eines Wertes annähernd Null ein Freigabesignal ausgegeben wird. Die Werte sind wiederum (entsprechend dem in der Beschreibung zu Figur 2 genannten Prinzipien) gewichtet, um die unterschiedliche Winkelstellung der Empfindlichkeitsachsen v, x, y zueinander auszugleichen.

**Patentansprüche**

1. Verfahren zur Funktionsüberprüfung einer Steueranordnung für Insassenschutzmittel in einem Kraftfahrzeug,

   - wobei die Steueranordnung zwei Beschleunigungssensoren (12,13,14) aufweist,
   - wobei die Beschleunigungssensoren (12,13,14) drei Empfindlichkeitsachsen (u,v,w,x,y) aufweisen, die eine Ebene aufspannen, die parallel ist zu einer durch eine Fahrzeuglängsachse (A-A') und eine Fahrzeugquerachse (B-B') festgelegten Ebene,
   - wobei die Steueranordnung eine Auswerteeinrichtung aufweist zur Auswertung von von den Beschleunigungssensoren, (12,13, 14) gelieferten drei Beschleunigungssignalen ($a_u,a_v,a_w,a_x,a_y$),
   - wobei in einem Normalbetrieb eine gewichtete Summe ($\Sigma_g$) aus den drei Beschleunigungssignalen ($a_u,a_v,a_w,a_x,a_y$) gebildet wird zur Überprüfung der Plausibilität der Signale,
   - wobei eine seismische Masse eines jeden Beschleunigungssensors (12,13,14) veranlaßt durch eine in der Auswerteeinrichtung abgelegten Testroutine (u,v,w,x,y) mit einer Kraft auslenkbar ist, die einem mehrfachen Wert der Erdbeschleunigung (G) entspricht,

   **dadurch gekennzeichnet,**

   - **dass** während eines Testbetriebs die seismischen Massen der Beschleunigungssensoren (12,13,14) in einer vorbestimmten Richtung ausgelenkt werden, wobei eine gewichtete Summe ($\Sigma_g$) der so erzeugten drei Beschleunigungssignale ($a_u,a_v,a_w,a_x,a_y$) bei funktionstüchtigen Beschleunigungssensoren (12,13,14) einen vorbestimmten Wert ergeben soll, und
   - **dass** eine einwandfreie Funktion der Beschleunigungssensoren (12,13,14) festgestellt wird, wenn die gewichtete Summe (Eg) der während der Testauslenkung tatsächlich gelieferten drei Beschleunigungssignale ($a_u,a_v,a_w,a_x,a_y$) annähernd den vorbestimmten Wert ergibt.

2. Verfahren nach Anspruch 1, **dadurch gekennzeichnet, dass** wenigstens eines der empfangenen Beschleunigungssignale ($a_u,a_v,a_w,a_x,a_y$) mit einem Schwellwert (SW) verglichen wird, und dass erst beim Überschreiten des Schwellwerts (SW) durch wenigstens eines der Beschleunigungssignale ($a_u,a_v,a_w,a_x,a_y$) eine Freigabe der Safingfunktion erfolgt.

3. Verfahren nach Anspruch 1 oder 2, **gekennzeichnet durch** die Verwendung eines X-Y-Beschleunigungssensors (14) mit zueinander senkrecht stehenden Empfindlichkeitsachsen (x,y).

4. Verfahren nach Anspruch 3, **gekennzeichnet durch** eine Anordnung des X-Y-Beschleunigungssensors (14) und eines weiteren Beschleunigungssensors (12,13), wobei dessen Empfindlichkeitsachse (v,w) schräg zu den Empfindlichkeitsachsen (x,y) des X-Y-Beschleunigungssensors (14) angeordnet ist.

5. Verfahren nach Anspruch 4, **gekennzeichnet durch** einen zwischen einer der Empfindlichkeitsachsen (x,y) des X-Y-Beschleunigungssensors (14) und der Empfindlichkeitsachse (v,w) des weiteren Beschleunigungssensors (12,13) eingeschlossenen Winkel von 45°.

6. Verfahren nach einem der vorherigen Ansprüche, **dadurch gekennzeichnet, dass** die seismischen Massen der Empfindlichkeitsachsen (u,v,w,x,y) der Beschleunigungssensoren (12, 13,14) mit annähernd gleicher Kraft (z.B. 12G) ausgelenkt werden, wobei die Summe der jeweils mit Korrekturfaktoren gewichteten Ausgangssignale ($a_u,a_v,a_w,a_x,a_y$) annähernd Null sein muss, um in der Testroutine eine einwandfreie Funktion der Beschleunigungssensoren (12,13,14) zu diagnostizieren.

7. Verfahren nach einem der vorhergehenden Ansprüche, **gekennzeichnet durch** eine kapazitive Testauslenkung der Beschleunigungssensoren (12,13, 14).

8. Vorrichtung zur Funktionsüberprüfung einer Steueranordnung für Insassenschutzmittel in einem Kraftfahrzeug,

   - mit zwei Beschleunigungssensoren (11,12,13, 14) wobei die Beschleunigungssensoren (12,13,14) drei Empfindlichkeitsachsen (u,v,w, x,y) aufweisen, die eine Ebene aufspannen, die parallel ist zu einer durch eine Fahrzeuglängsachse (A-A') und eine Fahrzeugquerachse (B-B') festgelegten Ebene,

- mit einer Auswerteeinrichtung zur Auswertung von von den Beschleunigungssensoren (12,13, 14) gelieferten drei Beschleunigungssignalen ($a_u, a_v, a_w, a_x, a_y$),
- mit einem Safing-Auswerter zum Bilden einer gewichteten Summe ($\Sigma_g$) aus den drei Beschleunigungssignalen ($a_u, a_v, a_w, a_x, a_y$) in einem Normalbetrieb zur Überprüfung der Plausibilität der Signale,
- mit einer in der Auswerteeinrichtung abgelegten Testroutine (u,v,w,x,y) zum Auslenken einer seismischen Masse eines jeden Beschleunigungssensors (12,13,14) mit einer Kraft, die einem mehrfachen Wert der Erdbeschleunigung (G) entspricht,

**dadurch gekennzeichnet,**

- **dass** ein Testbetrieb vorgesehen ist zum Auslenken der seismischen Massen der Beschleunigungssensoren (12,13,14) in einer vorbestimmten Richtung, wobei eine gewichtete Summe ($\Sigma_g$) der so erzeugten drei Beschleunigungssignale ($a_u, a_v, a_w, a_x, a_y$) bei funktionstüchtigen Beschleunigungssensoren (12,13, 14) einen vorbestimmten Wert ergeben soll, und
- **dass** eine Sicherheitsroutine vorgesehen ist zum Feststellen einer einwandfreien Funktion der Beschleunigungssensoren (12,13,14), wenn die gewichtete Summe ($\Sigma_g$) der während der Testauslenkung tatsächlich gelieferten drei Beschleunigungssignale ($a_u, a_v, a_w, a_x, a_y$) annähernd den vorbestimmten Wert ergibt.

**Claims**

1. Method for functional checking of a control arrangement for vehicle occupant protection means in a motor vehicle,

   - the control arrangement having two acceleration sensors (12, 13, 14),
   - the acceleration sensors (12, 13, 14) having three sensitivity axes (u, v, w, x, y) which form a plane which is parallel to a plane defined by a vehicle longitudinal axis (A-A') and a vehicle transverse axis (B-B'),
   - the control arrangement having an evaluation device for evaluating three acceleration signals ($a_u, a_v, a_w, a_x, a_y$) supplied by the acceleration sensors (12, 13, 14),
   - in normal operation a weighted sum ($\Sigma_g$) being formed from the three acceleration signals ($a_u$,

   $a_v, a_w, a_x, a_y$) in order to check the plausibility of the signals,
   - a test routine (u, v, w, x, y) stored in the evaluation device being capable of deflecting a seismic mass of each acceleration sensor (12, 13, 14) with a force which corresponds to a multiple of the acceleration (G) of the earth,

   **characterized**

   - **in that**, during a test mode, the seismic masses of the acceleration sensors (12, 13, 14) are deflected in a predetermined direction, it being intended for a weighted sum ($\Sigma_g$) of the three acceleration signals ($a_u, a_v, a_w, a_x, a_y$) generated in this way with functionally capable acceleration sensors (12, 13, 14) to yield a predetermined value, and
   - **in that** satisfactory functioning of the acceleration sensors (12, 13, 14) is determined if the weighted sum ($\Sigma_g$) of the three acceleration signals ($a_u, a_v, a_w, a_x, a_y$) which are actually supplied during the test deflection yields approximately the predetermined value.

2. Method according to Claim 1, **characterized in that** at least one of the received acceleration signals ($a_u, a_v, a_w, a_x, a_y$) is compared with a threshold value (SW), and **in that** the safing function is not enabled until at least one of the acceleration signals ($a_u, a_v, a_w, a_x, a_y$) exceeds the threshold value (SW).

3. Method according to Claim 1 or 2, **characterized by** the use of an X/Y acceleration sensor (14) with sensitivity axes (x, y) which are perpendicular to one another.

4. Method according to Claim 3, **characterized by** an arrangement of the X/Y acceleration sensor (14) and of a further acceleration sensor (12, 13), its sensitivity axis (v, w) being arranged obliquely with respect to the sensitivity axes (x, y) of the X/Y acceleration sensor (14).

5. Method according to Claim 4, **characterized by** an angle of 45° which is enclosed between one of the sensitivity axes (x, y) of the X/Y acceleration sensor (14) and the sensitivity axis (v, w) of the further acceleration sensor (12, 13).

6. Method according to one of the preceding claims, **characterized in that** the seismic masses of the sensitivity axes (u, v, w, x, y) of the acceleration sensors (12, 13, 14) are deflected with approximately the same force (for example 12G), the sum of the output signals ($a_u, a_v, a_w, a_x, a_y$) which are respectively weighted by the correction factors having to be approximately zero in order to diagnose satisfactory functioning of the acceleration sensors (12, 13, 14) in the test routine.

7. Method according to one of the preceding claims, **characterized by** a capacitive test deflection of the acceleration sensors (12, 13, 14).

8. Device for functionally checking a control arrangement for vehicle occupant protection means in a motor vehicle,

  - having two acceleration sensors (11, 12, 13, 14), the acceleration sensors (12, 13, 14) having three sensitivity axes (u, v, w, x, y) which form a plane which is parallel to a plane defined by a vehicle longitudinal axis (A-A') and a vehicle transverse axis (B-B'),
  - having an evaluation device for evaluating three acceleration signals ($a_u$, $a_v$, $a_w$, $a_x$, $a_y$) supplied by the acceleration sensors (12, 13, 14),
  - having a safing evaluator for forming a weighted sum ($\Sigma_g$) from the three acceleration signals ($a_u$, $a_v$, $a_w$, $a_x$, $a_y$) in normal operation in order to check the plausibility of the signals,
  - having a test routine (u, v, w, x, y) which is stored in the evaluation device and has the purpose of deflecting a seismic mass of each acceleration sensor (12, 13, 14) with a force which corresponds to a multiple of the acceleration (G) of the earth,

  **characterized**

  - **in that** a test mode is provided for deflecting the seismic masses of the acceleration sensors (12, 13, 14) in a predetermined direction, it being intended for a weighted sum ($\Sigma_g$) of the three acceleration signals ($a_u$, $a_v$, $a_w$, $a_x$, $a_y$) generated in this way with functionally capable acceleration sensors (12, 13, 14) to yield a predetermined value, and
  - **in that** a safety routine is provided for determining satisfactory functioning of the acceleration sensors (12, 13, 14) if the weighted sum ($\Sigma_g$) of the three acceleration signals ($a_u$, $a_v$, $a_w$, $a_x$, $a_y$) which are actually supplied during the test deflection yields approximately the predetermined value.

**Revendications**

1. Procédé de vérification du fonctionnement d'un dispositif de commande de moyens de protection des passagers dans un véhicule automobile,

  - dans lequel le dispositif de commande présente deux capteurs d'accélération (12, 13, 14),
  - dans lequel les capteurs d'accélération (12, 13, 14) présentent trois axes de sensibilité (u, v, w, x, y) qui constituent un plan qui est parallèle à un plan défini par un axe longitudinal (A-A') du véhicule et un axe transversal (B-B') du véhicule,
  - dans lequel le dispositif de commande présente un dispositif d'évaluation pour l'évaluation de trois signaux d'accélération ($a_u$, $a_v$, $a_w$, $a_x$, $a_y$) fournis par les capteurs d'accélération (12, 13, 14),
  - dans lequel, dans un fonctionnement normal, un total pondéré ($\Sigma_g$) est formé à partir des trois signaux d'accélération ($a_u$, $a_v$, $a_w$, $a_x$, $a_y$) pour la vérification de la plausibilité des signaux,
  - dans lequel une masse sismique de chaque capteur d'accélération (12, 13, 14), causée par un programme de test (u, v, w, x, y) stocké dans le dispositif d'évaluation, peut être déviée avec une force qui correspond à une valeur multiple de l'accélération due à la gravité (G),

  **caractérisé en ce**

  - **que**, pendant un fonctionnement d'essai, les masses sismiques des capteurs d'accélération (12, 13, 14) sont déviées dans une direction prédéterminée, de sorte qu'un total pondéré ($\Sigma_g$) des trois signaux d'accélération ($a_u$, $a_v$, $a_w$, $a_x$, $a_y$) ainsi produits doit donner, si les capteurs d'accélération (12, 13, 14) sont en parfait état de fonctionnement, une valeur prédéterminée, et
  - **qu'**un parfait fonctionnement des capteurs d'accélération (12, 13, 14) est constaté si le total pondéré ($\Sigma_g$) des trois signaux d'accélération ($a_u$, $a_v$, $a_w$, $a_x$, $a_y$) fournis réellement durant la déviation d'essai donne approximativement la valeur prédéterminée.

2. Procédé selon la revendication 1, **caractérisé en ce qu'**au moins l'un des signaux d'accélération ($a_u$, $a_v$, $a_w$, $a_x$, $a_y$) reçus est comparé à une valeur seuil (SW) et **en ce qu'**une validation de la fonction de détection de l'impact de sécurité a lieu seulement lorsque l'un au moins des signaux d'accélération ($a_u$, $a_v$, $a_w$, $a_x$, $a_y$) dépasse la valeur seuil (SW).

3. Procédé selon la revendication 1 ou 2, **caractérisé par** l'utilisation d'un capteur d'accélération X-Y (14) avec des axes de sensibilité (x, y) disposés perpendiculairement l'un par rapport à l'autre.

4. Procédé selon la revendication 3, **caractérisé par** un agencement du capteur d'accélération X-Y (14) et d'un autre capteur d'accélération (12, 13), dans lequel son axe de sensibilité (v, w) est disposé de manière inclinée par rapport aux axes de sensibilité (x, y) du capteur d'accélération X-Y (14).

**5.** Procédé selon la revendication 4, **caractérisé par** un angle de 45° inclus entre l'un des axes de sensibilité (x, y) du capteur d'accélération X-Y (14) et l'axe de sensibilité (v, w) de l'autre capteur d'accélération (12, 13).

**6.** Procédé selon l'une des revendications précédentes, **caractérisé en ce que** les masses sismiques des axes de sensibilité (u, v, w, x, y) des capteurs d'accélération (12, 13, 14) sont déviées avec approximativement la même force (par exemple 12G), de sorte que le total des signaux de sortie (au, $a_v$, $a_w$, $a_x$, $a_y$) pondérés respectivement avec des facteurs de correction doit être proche de zéro pour diagnostiquer dans le programme de test un parfait fonctionnement des capteurs d'accélération (12, 13, 14).

**7.** Procédé selon l'une des revendications précédentes, **caractérisé par** une déviation capacitive de test des capteurs d'accélération (12, 13, 14).

**8.** Dispositif de vérification du fonctionnement d'un dispositif de commande de moyens de protection des passagers dans un véhicule automobile,

- comprenant deux capteurs d'accélération (11, 12, 13, 14), dans lequel les capteurs d'accélération (12, 13, 14) présentent trois axes de sensibilité (u, v, w, x, y) qui constituent un plan qui est parallèle à un plan défini par un axe longitudinal (A-A') du véhicule et un axe transversal (B-B') du véhicule,
- comprenant un dispositif d'évaluation pour l'évaluation de trois signaux d'accélération ($a_u$, $a_v$, $a_w$, $a_x$, $a_y$) fournis par les capteurs d'accélération (12, 13, 14),
- comprenant un évaluateur de la détection de l'impact de sécurité pour la formation d'un total pondéré ($\Sigma_g$) à partir des trois signaux d'accélération ($a_u$, $a_v$, $a_w$, $a_x$, $a_y$) dans un fonctionnement normal, pour la vérification de la plausibilité des signaux,
- comprenant un programme de test (u, v, w, x, y) stocké dans le dispositif d'évaluation pour la déviation d'une masse sismique de chaque capteur d'accélération (12, 13, 14) avec une force qui correspond à une valeur multiple de l'accélération due à la gravité (G),

    **caractérisé en ce**

- **qu'**il est prévu un fonctionnement d'essai pour la déviation des masses sismiques des capteurs d'accélération (12, 13, 14) dans une direction prédéterminée, de sorte qu'un total pondéré ($\Sigma_g$) des trois signaux d'accélération ($a_u$, $a_v$, $a_w$, $a_x$, $a_y$) ainsi produits doit donner, si les capteurs d'accélération (12, 13, 14) sont en parfait état de fonctionnement, une valeur prédéterminée, et
- **qu'**il est prévu un programme de sécurité pour constater un parfait fonctionnement des capteurs d'accélération (12, 13, 14) lorsque le total pondéré ($\Sigma_g$) des trois signaux d'accélération ($a_u$, $a_v$, $a_w$, $a_x$, $a_y$) fournis réellement durant la déviation d'essai donne approximativement la valeur prédéterminée.

## FIG 1

## FIG 2

FIG 3